(19) Europäisches Patentamt
European Patent Office
Office européen des brevets

(11) EP 0 739 939 A2

(12) EUROPEAN PATENT APPLICATION

(43) Date of publication:
**30.10.1996 Bulletin 1996/44**

(51) Int Cl.[6]: **C08L 23/10**, C08L 53/00

(21) Application number: **96302968.1**

(22) Date of filing: **26.04.1996**

(84) Designated Contracting States:
**BE DE FR GB IT**

(30) Priority: **27.04.1995 JP 104466/95**

(71) Applicant: **SUMITOMO CHEMICAL COMPANY LIMITED**
**Osaka-shi, Osaka 541 (JP)**

(72) Inventors:
- **Hirakawa, Manabu**
  **Ichihara-shi, Chiba (JP)**
- **Ohkawa, Kenichi**
  **Ichihara-shi, Chiba (JP)**
- **Kondo, Shin-ichi**
  **Ichihara-shi, Chiba (JP)**

(74) Representative: **Woods, Geoffrey Corlett**
**J.A. KEMP & CO.**
**14 South Square**
**Gray's Inn**
**London WC1R 5LX (GB)**

# (54) Polypropylene composition

(57) A polypropylene composition comprising:

(1) 65 to 99% by weight of a crystalline polypropylene (A);

(2) 1 to 35% by weight of a graft copolymer rubber (B) obtainable by graft-polymerizing an unsaturated monomer to an ethylene-α-olefin copolymer rubber; and

(3) 0 to parts by weight of an ethylene-α-olefin copolymer rubber (c) and/or an alkenyl aromatic compound containing rubber (d).

EP 0 739 939 A2

## Description

BACKGROUND OF THE INVENTION

Field of the Invention

The present invention relates to a polypropylene composition having superior rigidity and impact resistance. Particularly, the present invention relates to a polypropylene composition comprising a crystalline polypropylene (A) and a rubber component (B) prepared by graft-polymerizing an unsaturated monomer to an ethylene-α-olefin copolymer rubber and if necessary, a further specific rubber component. This composition has superior rigidity and impact resistance with regard to physical properties, and is particularly useful as a molded article.

Prior Art

Recently, from a view point of light weight and low cost, a crystalline propylene-ethylene block copolymer has been used as a material for automobiles and home electric articles. However, the conventional crystalline propylene-ethylene block copolymer is low in impact strength and has a relatively high gravity because the copolymer contains a large amount of an inorganic filler in order to improve rigidity and thermal properties such as heat distortion temperature and the like.

It is disclosed in Japanese Patent Publication (Unexamined) Nos. Sho 53-22552(1983) and Sho 53-40045(1983) to incorporate an ethylene-propylene copolymer rubber into the crystalline propylene-ethylene block copolymer for improving impact strength. This composition, however, is inferior in rigidity and thermal properties such as heat distortion temperature and the like because of addition of the ethylene-propylene copolymer rubber. For resolving this problem, it is disclosed in, for example, Japanese Patent Publication (Unexamined) Nos. Sho 51-136735(1976) and Sho 53-64256(1978), Sho 53-64257(1978), Sho 57-55952(1982), Sho 57-207630(1982), Sho 58-17139(1983), Sho 58-111846(1983) and Sho 59-98157(1984), Japanese Patent Publication (Examined) No. Sho 55-3374(1980) and the like, to add an inorganic filler such as calcium carbonate, barium sulfate, mica, crystalline calcium silicate, talc and the like.

Further, in Japanese Patent Publication (Unexamined) Nos. Sho 58-17139(1983) and 58-17140(1983), it is proposed to add an ethylene-butene-1 copolymer rubber instead of the ethylene-propylene copolymer rubber to the crystalline propylene-ethylene block copolymer. Particularly, in Japanese Patent Publication (Unexamined) No. Sho 58-17140(1983), it is described to that the use of the ethylene-butene-1 copolymer rubber, in comparison with the ethylene-propylene copolymer rubber, results in reducing the impact whitened area and improving scratch resistance.

As described above, the crystalline propylene-ethylene block copolymer/the ethylene-propylene copolymer rubber composition (hereinafter, abbreviated to as "ethylene-propylene copolymer rubber composition") has been widely used as a material for automobiles and home electric articles because of low cost, good moldability and the like. By improving the ethylene-propylene copolymer rubber component, development of materials well balanced in impact strength and rigidity is required still more.

SUMMARY OF THE INVENTION

It is an object of the present invention to provide a material well balanced in impact strength and rigidity by using a crystalline polypropylene as a major component, and adding a specific rubber component thereto, in comparison with the conventional ethylene-propylene copolymer rubber composition.

According to the present invention, there is provided a polypropylene composition comprising crystalline polypropylene (A) and a graft copolymer rubber (B) obtainable by graft-polymerizing an unsaturated monomer to an ethylene-α-olefin copolymer rubber. That is, the present invention provides a polypropylene composition comprising:

(1) 65 to 99% by weight of a crystalline polypropylene (A) ; and
(2) 1 to 35% by weight of a graft copolymer rubber (B) obtainable by graft-polymerizing an unsaturated monomer (b) to an ethylene-α-olefin copolymer rubber(a).

The present invention is explained in detail below.

DETAILED DESCRIPTION OF THE INVENTION

In the present invention, a crystalline polypropylene means a crystalline polymer containing propylene as a major component.

In the present specification, including the accompanying claims, a crystalline polymer is typically a polymer which has an isotactic pentad fraction of 0.90 or more or a polymer which has a propylene homopolymer portion having an isotactic pentad fraction of 0.90 or more.

A crystalline propylene homopolymer (i), a crystalline propylene-ethylene block copolymer (ii) having a crystalline propylene homopolymer portion as first segment and propylene-ethylene random copolymer portion as second segment, and a mixture (iii) of the crystalline propylene homopolymer (i) and the crystalline block copolymer (ii) are preferably illustrated. Herein, as known, the propylene-ethylene block copolymer strictly means an intimate mixture of the first segment and second segment prepared by polymerizing propylene with a Zieglar-Natta catalyst system using a titanium compound as a transition metal compound component in the first stage and subsequently copolymerizing propylene and ethylene in the second stage.

In the present invention, a propylene homopolymer portion in the crystalline polypropylene(A) preferably has a Q value of 3.0 to 5.0, more preferably 3.5 to 4.5. The Q value means the ratio of the weight average molecular weight (Mw) to the number average molecular weight (Mn) [Mw/Mn] determined from the molecular weight distribution measured according to the gel permeation chromatography (GPC) method. When the Q value is less than 3.0, a flowability is reduced. And, when the Q value is more than 5.0, a preferable result in balance between rigidity and impact strength, can not be obtained.

Herein, the propylene homopolymer portion in the crystalline polypropylene (A) means a crystalline propylene homopolymer (i) or the first segment of crystalline propylene-ethylene block copolymer (ii).

Besides, when the crystalline polypropylene (A) is a crystalline homopolymer (i), specifically suitable physical properties and compositions are as follows:
That is, as described above, the Q value is 3.0 to 5.0, preferably 3.5 to 4.5. Further, an isotactic pentad fraction determined by $^{13}$C-NMR, is preferably at least 0.96, more preferably at least 0.97. When the isotactic pentad fraction is less than 0.96, it is difficult to satisfy the desired rigidity, thermal resistance and the like.

An intrinsic viscosity $[\eta]_P$ in tetralin at 135°C is 0.85 to 1.60 dl/g, preferably 0.90 to 1.30 dl/g. When the intrinsic viscosity $[\eta]_P$ is less than 0.85 dl/g, a preferable result can not be obtained because of a reduction in the impact strength. On the other hand, when the intrinsic viscosity $[\eta]_P$ exceeds 1.60 dl/g, the flowability is reduced.

Next, When the crystalline polypropylene (A) is a crystalline propylene-ethylene block copolymer (ii) having a propylene homopolymer portion as a first segment and propylene-ethylene random copolymer portion as a second segment, specifically suitable physical properties and compositions required are as follows.
The physical properties of the propylene homopolymer portion of crystalline propylene-ethylene block copolymer(ii) are the same as those of the crystalline propylene homopolymer (i) as described above. That is, the Q value is 3.0 to 5.0, preferably 3.5 to 4.5. The isotactic pentad fraction determined by $^{13}$C-NMR is at least 0.96, and preferably at least 0.97. The intrinsic viscosity $[\eta]_p$ measured in tetralin at 135°C is 0.85 to 1.60 dl/g, preferably 0.90 to 1.30 dl/g.

The propylene homopolymer portion of crystalline propylene-ethylene block copolymer (ii) can be obtained by taking out a portion produced from a polymerization vessel after the propylene homopolymer portion was produced in the first stage of the polymerization.

The content of propylene-ethylene random copolymer portion as second segment in the crystalline propylene-ethylene block copolymer (ii) is 5 to 40% by weight, preferably 10 to 30 % by weight based on the propylene-ethylene block copolymer (ii).

An ethylene$(C_2')_{EP}$ content in the propylene-ethylene random copolymer portion is preferably 25 to 55% by weight, more preferably 30 to 50% by weight. When the ethylene content is less than 25% by weight, or more than 55% by weight, a preferable result relating to impact strength can be obtained.

An intrinsic viscosity $[\eta]_{EP}$ in tetralin at 135°C of the propylene-ethylene random copolymer portion is preferably 2.5 to 6.5 dl/g, more preferably 2.8 to 6.0 dl/g. When the intrinsic viscosity $[\eta]_{EP}$ is less than 2.5 dl/g, a preferable result in balance between rigidity and impact strength can not be obtained. When the intrinsic viscosity $[\eta]_{EP}$ is more than 6.5 dl/g, a preferable result in a surface quality can not be obtained because of formation of granular structure.

Measurement methods of physical properties described above are explained below.

The isotactic pentad fraction is the fraction of propylene monomer unit existing at the center of the isotactic chain in the form of a pentad unit, in other words, the chain in which five propylene monomer units are successively meso-bonded, in the crystalline propylene molecular chain as measured by the method disclosed by A. Zambelli et al in macromolecules, 6, 925(1973), namely by use of $^{13}$C-NMR. However, the assignment of NMR absorption peaks is determined accoding to the method proposed in 'Macromolecules, 8, 687(1975)' published thereafter. Specifically, the isotactic pentad fraction is measured as an area fraction of mmmm peak in the total absorption peak in the methyl carbon region of $^{13}$C-NMR spectrum. When the isotactic pentad fraction of the NPL standard substance CRM No. M19-14 Polypropylene PP/MWD/2 of NATIONAL PHYSICAL LABORATORY in U. K., was measured according to this method, it was 0.944.

The weight ratio (X) of the propylene-ethylene random copolymer portion to the total crystalline block copolymer (ii) can be determined by measuring a quantity of heat of fusion of crystal of each of the crystalline propylene homopolymer portion and the total block copolymer and calculating from the following equations:

$$X=1-(\Delta Hf)_T/(\Delta Hf)_P$$

$(\Delta Hf)_T$ : the quantity of heat of fusion of the total block copolymer (cal/g)
$(\Delta Hf)_P$ : the quantity of heat of fusion of crystalline propylene homopolymer portion (cal/g)

The ethylene content in the propylene-ethylene random copolymer portion can be determined by measuring the ethylene content (% by weight) in the total block copolymer according to IR method and calculating the following equation:

$$(C_2')_{EP}=(C_2')_T/X$$

$(C_2')_{EP}$ : Ethylene content in the total block copolymer (% by weight)
$(C_2')_T$ : Ethylene content in the propylene-ethylene random copolymer portion (% by weight).

In the crystalline propylene-ethylene block copolymer (ii), an intrinsic viscosity $[\eta]_{EP}$ in tetralin at 135°C of the propylene-ethylene random copolymer portion can be determined by measuring intrinsic viscosities of each the crystalline propylene homopolymer portion and the block copolymer, and calculating the following equations:

$$[\eta]_{EP}=[\eta]_T/X-(1/X-1)\ [\eta]_P.$$

$[\eta]_P$= intrinsic viscosity of the crystalline propylene homopolymer portion (dl/g)
$[\eta]_T$=intrinsic viscosity of the total block copolymer.

In a use for which impact strength is particularly required, crystalline polypropylene (A) is preferably crystalline propylene-ethylene block copolymer (ii) composed of a crystalline propylene homopolymer portion as a first segment polymerized in the first stage and a propylene-ethylene random copolymer portion as a second segment polymerized in the second stage.

The block propylene-ethylene copolymer (ii) can be produced by a slurry polymerization, a gas phase polymerization or the like.

A graft copolymer rubber (B) used in the present invention is obtained by graft-polymerizing an unsaturated monomer to an ethylene-α-olefin copolymer rubber (a). Two or more kinds of graft copolymer rubber may be used.

The ethylene-α-olefin copolymer rubber (a) is at least one selected from an ethylene-α-olefin copolymer rubber and an ethylene-α-olefin-non-conjugated diene copolymer rubber. As an α-olefin in the ethylene-α -olefin copolymer rubber(a), there are illustrated propylene, butene-1, pentene-1, hexene-1, octene-1, heptene-1, 4-methyl-pentene-1, 4-methyl-hexene-1, 4,4'-dimethyl-pentene-1, octadecene-1 and the like. The non-conjugated diene as a third component includes 5-ethylidene-2-norbornene, dicyclopentadiene, 1,4-hexadiene and the like. As concrete examples of the ethylene-α -olefin copolymer rubber (a), there are exemplified ethylene-propylene copolymer rubber, ethylene-butene-1 copolymer rubber, ethylene-propylene-5-ethylidene-2-norbornene terpolymer rubber, ethylene-propylenedicyclopentadiene terpolymer rubber and the like.

In the present invention, the ethylene-α-olefin copolymer rubber (a) has preferably a Q value of not more than 5.0. Typically it has a Moony viscosity at 100°C of not more than 100, preferably not more than 90. Herein, the Q value was explained above. When the ethylene-α-olefin copolymer rubber (a) of having the Q value of more than 5.0 is used in graft polymerization and thus produced graft polymer rubber is blended, the composition obtained has insufficient impact strength. When the Moony viscosity at 100°C is more than 100, a preferable result in balance between rigidity and impact strength can not be obtained.

These ethylene-α-olefin copolymer rubbers (a) can be obtained by methods disclosed in Japanese Patent Publication (Examined) No. Sho 43-13052(1968) and Japanese Patent Publication (Unexamined) No. Hei 2-77410(1990), that is, by copolymerizing ethylene and an α-olefin, if necessary, adding a non-conjugated diene, with a Zieglar-Natta catalyst system comprising a vanadium compound as a transition metal compound component, an organoaluminum compound and a halogenated ester compound in an inert solvent such as a hydrocarbon. Further, the ethylene-α-olefin copolymer rubbers (a) can be obtained by copolymerizing ethylene and the α-olefin with a so-called metallocene catalyst system comprising a well-known metallocene compound which coordinates cyclopentadiene compounds or derivatives thereof as a ligand to titanium, zirconium or hafnium, and an aluminoxane.

Next, as an unsaturated monomer used for graft-polymerizing to the copolymer rubber, alkenyl aromatic compounds, unsaturated carboxylic acids, alkyl ester derivatives of unsaturated carboxylic acid, or other unsaturated compounds are used. As alkenyl aromatic compounds, there are illustrated compounds represented by the following general formula:

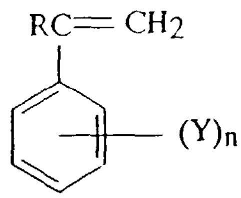

Wherein R represents a hydrogen atom, a lower alkyl group or a halogen atom, Y represents a hydrogen atom, vinyl group, a halogen atom, amino group, hydroxy group or a lower alkyl group, and n is an integer of 1 to 5. Herein, the lower alkyl group means an alkyl group having 1 to 6 carbon atoms.

As concrete examples, there are illustrated styrene, α-methyl styrene, α-chloro styrene, vinyl toluene, divinyl benzene and the like. Styrene is the most preferable.

As unsaturated carboxylic acids, alkyl ester derivatives of unsaturated carboxylic acid, or other unsaturated compounds, for example, compounds mentioned at pages 444-459 in "High Molecules Data Handbook, Basic Parts" (Edited by "Koubunshi Gakkai", 1986, published by Baifukan ), are illustrated. As concrete examples, there are illustrated unsaturated carboxylic acids having up to 12 carbon atoms such as acrylic acid, methacrylic acid, derivatives of unsaturated carboxylic acid such as methylmethacrylate, methylacrylate, 2-ethylhexyl acrylate, ethylacrylate, ethylmethacrylate, butylacrylate, butylmethacrylate and the like, unsaturated dicarboxylic acids or anhydrides thereof having up to six carbon atoms such as fumaric acid, maleic acid, maleic anhydride, itaconic acid and the like, derivatives of unsaturated carboxylic acids or dicarboxylic acids having up to eight carbon atoms such as acrylamide, N-(hydroxymethyl) acrylamide, glycidyl acrylate, glycidyl methacrylate, acrylonitrile, methacrylonitrile and unsaturated carboxylic acids or derivatives thereof having up to fourteen carbon atoms such as a mono- or di-ester of maleic acid (eg a mono- or di- $C_1$-$C_6$ alkyl ester of maleic acid), N-phenylmaleimide, N,N'-methaphenylenebismaleimide and the like. Alkyl ester derivatives of unsaturated carboxylic acids are typically $C_1$-$C_6$ alkyl esters of unsaturated carboxylic acids having up to 12 carbon atoms. Similarly, mono- or di- $C_1$-$C_6$ alkyl esters of dicarboxylic acids having up to 6 carbon atoms are suitable as the unsaturated monomer(b).

Among unsaturated monomers, alkenyl compounds, unsaturated carboxylic acids and alkyl esters of unsaturated carboxylic acids are particularly preferred.

As a method graft-polymerizing an unsaturated monomer to the ethylene-α-olefin copolymer rubber (a), any well-known methods, for example, emulsion polymerization methods, bulk polymerization methods (Japanese Patent Publication (Examined) No. Sho 42-662(1967), U.S. Patent No. 3,435,096 ), solution polymerization methods (U.S. Patent Nos. 3,538,190 and 3,538,191), and suspension polymerization methods (Japanese Patent Publication (Examined) Nos. Sho 49-10831(1974), Sho 57-40166(1982), 62-10565(1987)) are adopted. Particularly, a suspension polymerization method graft-polymerizing an unsaturated monomer to the ethylene-α-olefin copolymer rubber (a) in the presence of a free radical initiator and dispersing agent in the desired amount in aqueous suspension medium, is preferred.

As dispersing agents, for example, polyvinyl alcohol, cellulose compounds, polyacrylic acid compounds, inorganic salts, alkylene oxides and the like are illustrated. As a free radical initiator, there are given organic peroxides such as benzoyl peroxide, lauroyl peroxide, tert-butyl peroxy pivalate, tert-butyl peroxy-2-ethyl hexanoate, tert-butyl hydroperoxide, dicumyl peroxide, azo compounds such as azo-bis-isobutyronitrile, azo-bis-dimethylvaleronitrile and the like.

A content of the unsaturated monomer (b) in the graft copolymer rubber (B) is 1 to 50% by weight. From the point of balance between rigidity and impact strength, the content is more preferably 5 to 40% by weight, most preferably 10 to 30% by weight. When the content exceeds 50% by weight, a preferable result in balance between rigidity and impact strength can not be obtained.

The composition of the present invention comprises 65 to 99% by weight of a crystalline polypropylene (A) and 1 to 35% by weight of a graft copolymer rubber(B), and preferably 75 to 97% by weight of a crystalline polypropylene (A) and 3 to 25% by weight of a graft copolymer rubber (B). When the content of copolymer rubber (B) is less than 1% by weight, or more than 35% by weight, a preferable result relating to balance between rigidity and impact strength can not be obtained.

The graft copolymer rubber (B) may be used as a master batch prepared by pre-mixing with the crystalline polypropylene (A).

If necessary, an ethylene-α-olefin copolymer rubber(c) and/or an alkenyl aromatic compound-containing rubber(d) may be added to the composition of the present invention with the purpose of improving balance among other physical properties such as moldability and the like.

The ethylene-α-olefin copolymer rubber(c) used in the present invention includes an ethylene-α-olefin copolymer rubber, an ethylene-α-olefin-non-conjugated diene terpolymer rubber and the like.

As an α-olefin used in the ethylene-α-olefin copolymer rubber (c), there are exemplified propylene, butene-1, pentene-1, hexene-1, octene-1, heptene-1, 4-methyl-pentene-1, 4-methyl-hexene-1, 4,4'-dimethylpentene-l, octadecene-1 and the like. As the non-conjugated diene of a third component, 5-ethylidene-2-norbornene, dicyclopentadiene, 1,4-hexadiene and the like are illustrated. As concrete examples of the ethylene-α -olefin copolymer rubber (c), there are exemplified ethylene-propylene copolymer rubber, ethylene-butene-1 copolymer rubber, ethylene-propylene-5-ethylidene-2-norbornene terpolymer rubber, ethylene-propylenedicyclopentadiene terpolymer rubber and the like. One or more kinds of these ethylene-α-olefin copolymer rubbers (c) may be used.

As the alkenyl aromatic compound-containing rubber (d), rubbers having the alkenyl aromatic compound bonded with an olefinic rubber or conjugated diene rubber by polymerization, reaction or the like are suitable. Suitable alkenyl-aromatic compounds are those discussed above as the unsaturated monomer (b). For example, a block or random copolymer rubber and a hydrogenated block or random copolymer prepared by hydrogenating the rubber component of the block or random copolymer rubber, such as a styrene-butadiene rubber (SBR), a styrene-butadienestyrene rubber (SBS), a styrene-isoprene-styrene rubber (SIS), hydrogenated rubbers thereof and the like.

A content of the alkenyl aromatic compound in the alkenyl aromatic compound-containing rubber (d) is preferably 1 to 50% by weight, more preferably 5 to 40% by weight. Use of two or more kinds of the alkenyl aromatic compound-containing rubbers (d) is not disturbed.

An added amount of the ethylene-α-olefin copolymer rubber(c) and/or the alkenyl aromatic compound-containing rubber(d) is 50 parts by weight or less, preferably 1 to 50 parts by weight to 100 parts by weight of the polypropylene composition ((A)+(B)).
When the amount exceeds 50 parts by weight, a preferable result in rigidity can not be obtained.

Further, an inorganic filler may be incorporated in the polypropylene composition of the present invention. As the inorganic filler, ones improving rigidity and thermal resistance, for example, calcium carbonate, mica, crystalline calcium silicate, talc, glass fibers and the like are illustrated. Particularly, talc and glass fibers are preferred. Talc has preferably an average particle size of not more than 4μm and more preferably not more than 3μm. When the average particle size is more than 4μm, impact strength of the polypropylene composition is reduced, and appearance such as gloss and the like become poor. Talc may be used without treatment or after treating a surface thereof with a silane-coupling agent, a titanium-coupling agent, a higher fatty acid, a higher fatty acid ester, a higher fatty acid amide, a higher fatty acid salt or another surfactant which are well-known, for improving interfacial adhesiveness to a polypropylene resin and dispersability.

Herein, the average particle size of talc means particle size D50 corresponding to 50% determined by an integrated distribution curve according to a minus sieve method measured by dispersing it in a dispersing medium such as water, an alcohol and the like using a centrifugal sedimentation type particle size distribution measuring instrument.

An added amount of the inorganic filler is usually 0 to 80 parts by weight to 100 parts of the polypropylene composition ((A)+(B)). When the amount exceeds 80 parts by weight, impact strength of the composition decreases.

The composition of the present invention can be prepared using a kneader such as a uniaxial extruder, a biaxial extruder, a Banbury mixer, a thermal roll or the like. A mixing of each components may be carried out at the same time or successively.

As methods of successive addition, there are given;

(1) a method adding a graft copolymer rubber (B), ethylene-α-olefin rubber (c) and/or an alkenyl aromatic compound-containing rubber (d) after mixing a crystalline polypropylene (A) and an inorganic filler (e), and
(2) a method preparing a master batch having a high concentration of an inorganic filler (e) by mixing crystalline polypropylene (A) and the inorganic filler (e), and diluting to the desired concentration with an additional crystalline polypropylene (A), a graft copolymer rubber (B), an ethylene-α-olefin rubber (c) and/or an alkenyl aromatic compound-containing rubber (d).

Further, as second method of successive addition, there are preferably adopted:

(3) a method adding and mixing an inorganic filler (e) after mixing crystalline polypropylene (A), a graft copolymer rubber (B), an ethylene-α-olefin rubber (c) and/or an alkenyl aromatic compound-containing rubber (d); and
(4) a method mixing a crystalline polypropylene (A) with a graft copolymer rubber (B), an ethylene-α-olefin rubber (c) and/or an alkenyl aromatic compound-containing rubber (d) so as to prepare a master batch having a high concentration of (B),(c) and/or (d), and diluting to the desired concentration with an additional crystalline polypropylene (A) and an inorganic filler (e).

Moreover, as third method of successive addition, there is given:

(5) a method separately preparing each a mixture of crystalline polypropylene (A) and an inorganic filler(e), and a mixture of a crystalline polypropylene (A), a graft copolymer rubber (B), an ethylene-α-olefin rubber (c) and/or an alkenyl aromatic compound-containing rubber (e), and finally mixing these as a mixture. A temperature of 170 to 250°C is needed for mixing and the mixing time is preferably 1 to 20 minutes.

Further, if necessary, additives such as antioxidants, ultra violet absorbents, lubricating agents, pigments, antistatic agents, metal reactivators, flame retardants, neutralizers, foaming agents, plasticizers, nucleating agents, bubble inhibitors, crosslinking agents and the like, can be properly blended in addition to the basic components described above using the mixing and kneading machine mentioned above.

The polypropylene composition of the present invention can be molded by a usual molding method to obtain injection-molded articles, and is suitably used for preparing shaped articles for automobiles and home electrics.

## EXAMPLE

The present invention is explained in detail by the Examples, but the present invention is not limited thereto.

The measurement methods of physical properties in the current specification, including the accompanying claims are as follows:

(1) Melt flow rate (MFR) was measured according to JIS K6758 at a temperature of 230°C and under a load of 2.16kg.

(2) Bending test

Bending test was carried out according to JIS K7203. Flexural modulus was measured using a test piece having a thickness of 6.4mm, prepared by injection-molding, under conditions of a span of 100mm and a loading speed of 2.0mm/min at a temperature of 23°C.

(3) Izod impact strength

Izod impact strength was measured according to JIS K7110 using a test piece having a thickness of 6.4mm, prepared by injection-molding. Impact strength of test piece notched after the molding, was measured at a temperature of 23°C.

(4) Brittle temperature was measured according to JIS K6758. The predetermined test piece of 6.3 X 38 X 2 mm in size was punched from a plane board having a size of 25 X 150 X 2 mm and the evaluation was carried out by the method described above.

(5) Contents of ethylene and propylene;

From absorbance of the characteristic absorption of methyl group ($-CH_3$) and methylene group ($-CH_2-$) appeared in IR spectrum measurement of a pressed sheet of a sample, contents of ethylene and propylene were determined by calibration curve method.

(6) Intrinsic viscosity

Using a Ubbelohde type viscometer, reduced viscosities of three solutions at each concentrations of 0.1, 0.2 and 0.5 dl/g, were measured. Intrinsic viscosity was determined according to the calculating method explained in " Polymer Solution, Polymer Experimental Science" at page 491 (Kyoritsu Shuppan Limited, 1982), namely a method extrapolating a viscosity at concentration of zero after each the reduced viscosities was plotted against each corresponding concentrations.

(7)Molecular weight distribution (Q value)

It was measured with Gel Permeation Chromatography (GPC) under the following condition:

(a) Crystalline polypropylene

| | |
|---|---|
| GPC : | 150C type |
| Kind of machine | 150 C type manufactured by Milipore Waters Company. |
| Column (two columns) | Shodex M/S 80 manufactured by Showa Denko k.k. |
| Sample amount | 300μl (Concentration of polymer 0.2wt%) |
| Flow rate | 1 ml/min |
| Measuring temperature | 135°C |
| solvent | o-dichlorobenzene |

A calibration curve of elution volume against molecular weight was prepared using a standard polystyrene manufactured by Toso Corporation. A weight average molecular weight (Mw) and number average molecular weight (Mn) of polystyrene conversion were determined and the Q value (Mw/Mn) was determined as a scale of molecular weight distribution.

(b)Ethylene-α-olefin copolymer rubber

| | |
|---|---|
| Kind of machine | 150 C type manufactured by Milipore Waters Company. |
| Column (one column) | Shodex M/S 80 manufactured by Showa Denko k.k. |
| Sample amount | 300μl (Concentration of polymer 0.2wt%) |
| Flow rate | 1 ml/min |
| Measuring temperature | 145°C |
| solvent | o-dichlorobenzene |

A weight average molecular weight (Mw) and number average molecular weight (Mn) of polystyrene conversion, and the Q value were determined as described above.

(8) Iodine value

This method was used for determination of a non-conjugated diene content. According to JIS K3331, an amount of iodine(g) consumed per 100 g of polymer was determined.

(9)Shear viscosity according to capillary flow test

Shear viscosity was measured with Capirograph manufactured by Toyo Seiki Seisakusho Ltd. under the following conditions:

Measuring temperature ; 230 °C
Share speed ; 10 $sec^{-1}$
Ratio of length(L) to diameter(D) of orifice (L/D); 20

(10) Moony viscosity was measured according to JIS-K-6300 at a temperature of 100°C.

Test pieces for physical property evaluation of items (2),(3) and (4) were prepared under the following conditions;

After the composition was dried at 120°C for 2 hours with a hot dryer, the composition was injection-molded under conditions of a molding temperature of 220°C, a mold cooling temperature of 50°C, injection time of 15 seconds and cooling time of 30 seconds with IS150E type injection molding machine manufactured by Toshiba Machine Co., Ltd.

The compositions described below were prepared by the following conditions:

A crystalline propylene homopolymer shown in Table 1 was mixed with graft copolymer rubber shown in Table 2 in a mixing ratio shown in Table 2, and was kneaded at rotating speed of 80 rpm for 10 minutes with a Banbury mixer manufactured by Kobe Steel Ltd., was formed into sheet with sheeting rolls, and was pelletized with a sheet pelletizer to obtain pellets of master batch shown in Table 3. After pre-mixing this master batch, a crystalline polypropylene (A) and 0.2 part by weight of p-tert-butyl aluminum benzoate as nucleating agent in a mixing ratio shown in Table 4 using a Henshel mixer and a Tanblar, thus mixture was kneaded and extruded with a biaxial kneading extruder (TSS 30BW-EX-2V type manufactured by The Japan Steel Works Ltd.) in an extruded amount of 30 kg/hr at a screw rotating speed of 90 rpm under a suction from a vent. A graft copolymer rubber (B) was prepared according to the method described in Reference Example 1.

Abbreviations in Tables shows as follows:

| | |
|---|---|
| BC; | propylene-ethylene block copolymer |
| PP; | propylene homopolymer |
| EPDM; | Ethylene-propylene-5-ethylidene-2-norbornene terpolymer rubber. |
| G-EPDM; | graft copolymer rubber |
| MMA; | Methylmethacrylate |
| P portion; | Homopolymer portion in BC |
| EP portion; | Propylene-ethylene random copolymer portion in BC |

Reference Example 1

Preparation of a graft copolymer rubber (B)

A graft copolymer rubber (B) was prepared by a suspension polymerization method with reference to the method mentioned in Example 1 of Japanese Patent Publication (Examined) No. Sho 62-10565 (1987). G-EPDM-1; this graft copolymer rubber (B) was prepared by a suspension polymerizing a mixture of 87% by weight of EPDM-1 shown in Table 1 and 13% by weight of styrene using Pururonic F68 ( manufactured by Asahi Denka Kogyo K.K.) as a dispersing agent and Sunperox TO-100 (manufactured by Sanken Kako Ltd.) as a free radical initiator. G-EPDM-2 to 5 were

prepared using a mixture shown in Table 2 in the similar manner as described above.

Examples 1 to 5 and comparative Examples 1 to 2

As shown in Table 4, compositions of Examples 1 to 5 were polypropylene compositions prepared by adding a graft copolymer rubber(B) to crystalline polypropylene (A) and compositions of Comparative Examples 1 to 2 were polypropylene compositions prepared by adding an ethylene-α-olefin copolymer rubber(c) to the crystalline polypropylene (A). Physical properties of these polypropylene compositions were evaluated. Results of evaluations are shown in Tables 5 and 6. In the comparison between these Examples and Comparative Example, polypropylene compositions using a graft copolymer rubber(B) prepared by graft-polymerizing an unsaturated monomer to an ethylene-α-olefin copolymer rubber(a), exhibited an improved balance of properties among flexural modulus, Izod impact strength and brittle temperature as compared to compositions using an ethylene-α-olefin copolymer rubber(a).

Table 1

| | Sample | P-portion | | | EP-portion | | |
|---|---|---|---|---|---|---|---|
| Poly-propylene | | Q value | $[\eta]_P$ (dl/g) | Isotactic pentad fraction | $[\eta]_P$ (dl/g) | Content 1 (%) | Content 2 (%) |
| | BC-1 | 4.0 | 1.17 | 0.97 | 4.3 | 16.6 | 42.1 |
| | PP-1 | 4.1 | 0.91 | 0.97 | | | |
| | PP-2 | 4.1 | 2.72 | 0.97 | | | |
| Rubber | Sample | propylene content(%) | Q value | Iodine value | Moony viscosity | Viscosity measured by Capirograph (poise) | |
| | EPDM-1 | 44 | 3.3 | 9 | 85 | 3.013E+4 | |
| | EPDM-2 | 50 | 4.8 | 11 | 43 | 1.102E+4 | |

Table 2

| Graft copolymer rubber | Sample | Composition of graft copolymer rubber at production (wt %) | | Viscosity measured by Capirograph (Unit; Poise) |
|---|---|---|---|---|
| | | Kind of rubber and content | Kind of unsaturated monomer and content | |
| | G-EPDM-1 | EPDM-1 87 | Styrene 13 | 4.136E + 4 |
| | G-EPDM-2 | EPDM-2 70 | Styrene 30 | 4.849E + 4 |
| | G-EPDM-3 | EPDM-3 70 | Styrene 25 MMA 5 | 4.693E + 4 |
| | G-EPDM-3 | EPDM-3 80 | Styrene 20 | 1.821E + 4 |

Table 3

| Sample | Composition ( % by weight) | |
|---|---|---|
| | PP-2 | Rubber (Kind of rubber) |
| MB-1 | 50 | 50 (G-EPDM-1) |
| MB-2 | 50 | 50 (G-EPDM-2) |
| MB-3 | 50 | 50 (G-EPDM-3) |
| MB-4 | 50 | 25 (EPDM-1) 25(G-EPDM-2) |
| MB-5 | 50 | 50 (G-EPDM-5) |
| MB-6 | 50 | 50 (EPDM-1) |
| MB-7 | 50 | 50 (EPDM-2) |
| MB: Master batch of crystalline polypropylene and graft copolymer rubber. | | |

Table 4

| | Composition (% by weight) | | |
|---|---|---|---|
| | BC-1 | PP-2 | MB (Kind of MB) |
| Example 1 | 50 | 33 | 17(MB-1) |
| Example 2 | 50 | 33 | 17(MB-2) |
| Example 3 | 50 | 33 | 17(MB-3) |
| Example 4 | 50 | 33 | 17(MB-4) |
| Example 5 | 50 | 33 | 17(MB-5) |
| Comparative Example 1 | 50 | 33 | 17(MB-6) |
| Comparative Example 2 | 50 | 33 | 17(MB-7) |

Table 5

| | Melt flow Rate | Flexural Modulus | IZOD Impact | Brittle temperature |
|---|---|---|---|---|
| Unit | g/10min. | kg. $cm^2$ | kg. cm/cm | °C |
| Example-1 | 20 | 14300 | 10.0 | -4 |
| Example-2 | 20 | 13900 | 10.3 | -5 |
| Example-3 | 20 | 14600 | 10.0 | -7 |
| Example-4 | 19 | 14000 | 9.8 | -4 |
| Comparative Example-1 | 18 | 14100 | 8.3 | -2 |

Table 6

| | Melt flow Rate | Flexural Modulus | IZOD Impact | Brittle temperature |
|---|---|---|---|---|
| Unit | g/10min. | kg. $cm^2$ | kg. cm/cm | °C |
| Example-5 | 20 | 13800 | 9.0 | -3 |
| Comparative Example-2 | 20 | 13800 | 7.5 | 0 |

As described above, the polypropylene composition of the present invention provides materials exhibiting a good balance between impact strength and rigidity compared with the conventional composition using an ethylene-α-olefin copolymer rubber.

## Claims

**1.** A polypropylene composition comprising:

(1) 65 to 99% by weight of a crystalline polypropylene (A); and
(2)1 to 35% by weight of a graft copolymer rubber (B) obtainable by graft-polymerizing an unsaturated monomer(b) to an ethylene-α-olefin copolymer rubber (a).

2. The polypropylene composition according to claim 1, wherein the crystalline polypropylene (A) is a crystalline propylene homopolymer (i) and/or a crystalline propylene-ethylene block copolymer (ii).

3. The polypropylene composition according to claim 2, wherein the crystalline propylene homopolymer (i) and/or the propylene homopolymer portion of the crystalline propylene-ethylene block copolymer (ii) have a Q value of 3.0 to 5.0 and an intrinsic viscosity $[\eta]_P$ in tetralin at 135°C of 0.85 to 1.60 dl/g.

4. The polypropylene composition according to claim 2 or 3, wherein the crystalline propylene homopolymer (i) and/or the propylene homopolymer portion of the crystalline propylene-ethylene block copolymer (ii) have an isotactic pentad fraction of at least 0.97,

5. The polypropylene composition according to any one of the preceding claims, wherein the ethylene-α-olefin copolymer rubber (a) has a Q value of not more than 5.0, a Moony viscosity at 100°C of not more than 100, and is selected from ethylene-α-olefin copolymer rubbers, ethylene-α-olefin-non-conjugated diene copolymer rubbers and mixtures thereof.

6. The polypropylene composition according to any one of the preceding claims, wherein the unsaturated monomer (b) is selected from alkenyl aromatic compounds, unsaturated carboxylic acids and alkyl ester derivatives of unsaturated carboxylic acid.

7. The polypropylene composition according to any one of the preceding claims, wherein a content of the unsaturated monomer (b) in the graft copolymer rubber(B) is 1 to 50% by weight.

8. The polypropylene composition according to any one of the preceding claims, further comprising 50 parts by weight or less of an ethylene-α-olefin copolymer rubber (c) and/or an alkenyl aromatic compound containing rubber (d) to 100 parts by weight of the propylene composition.

9. A polypropylene composition comprising:

(1) 65 to 99% by weight of a crystalline polypropylene (A) ;
(2) 1 to 35% by weight of a graft copolymer rubber(B) obtainable by graft-polymerizing an unsaturated monomer (b) to an ethylene-α-olefin copolymer rubber (a); and
(3) 1 to 50 parts by weight of an ethylene-α-olefin copolymer rubber (c) and/or an alkenyl aromatic compound containing rubber (d) to 100 parts by weight of the total of (1) and (2).

10. A molded article obtainable by molding the polypropylene composition of any one of the preceding claims.